# DEMANDE DE BREVET EUROPEEN

(11) **EP 1 560 474 A2**
(43) Date de publication de la demande: **03.08.2005**
(21) Numéro de dépôt: 05290138.6
(22) Date de dépôt: 21.01.2005
(51) Int. Cl.: H05B 41/292, H05B 41/285, H02M 3/335, H02M 1/00

(54) **Dispositif de protection pour alimentation à découpage et dispositif d'éclairage de véhicule**

(30) Priorité: 30.01.2004 FR 0400935
(71) Demandeur: VALEO VISION, 93012 Bobigny Cédex (FR)
(72) Inventeur: Clavier, Philippe, 93000 Bobigny (FR)

(57) **Abrégé**

L'invention concerne un dispositif de protection pour une alimentation à découpage (10) du type comportant un convertisseur de tension (12) dont le secondaire (14) est connecté à une charge comme une source lumineuse du type lampe xenon, et le primaire (16) est relié à une source d'énergie et est commandé par un interrupteur de puissance (18) éventuellement piloté par une unité de commande (40), caractérisé en ce qu'il comporte :
- au moins un premier moyen (20, 26) pour produire une image d'un courant circulant dans l'interrupteur de puissance (18) à partir d'un courant circulant dans un condensateur de stockage d'énergie (20) connecté dans le circuit primaire (16) du convertisseur de tension (12), connecté à
- au moins un second moyen (32) pour détecter sur l'image d'un courant un niveau de courant critique, connecté à
- au moins un troisième moyen (30) de contrôle de l'interrupteur de puissance (18) pour modifier l'état de conduction de l'interrupteur de puissance lors de la détection d'un niveau de courant critique.

## Description

L'invention concerne un dispositif de protection pour une alimentation à découpage. Elle concerne aussi un dispositif d'éclairage de véhicule utilisant un tel dispositif de protection.

Plus particulièrement, l'invention propose un dispositif de protection pour une alimentation à découpage du type comportant un convertisseur de tension dont le secondaire est connecté à une charge électrique et le primaire est relié à une source électrique comme une source lumineuse du type lampe xénon, (appelée encore lampe à décharge) et commandé par un interrupteur de puissance.

Une telle alimentation à découpage est destinée, par exemple, à alimenter tout dispositif d'éclairage et/ou de signalisation, du type un projecteur pour véhicule automobile. Le secondaire du convertisseur de tension est connecté au projecteur et le primaire du convertisseur de tension est connecté à une batterie du réseau de bord du véhicule automobile.

Dans une alimentation à découpage, des phénomènes d'emballement thermique du convertisseur, dus à des températures élevées, apparaissent et affectent les caractéristiques des composants électroniques.

Un tel emballement thermique survient particulièrement dans un environnement automobile, la température étant élevée dans le compartiment moteur où se trouvent le projecteur et son alimentation pilotée proprement dite.

De même, en production, le déverminage des alimentations pilotées des projecteurs se fait en partie sur lampe. Après de nombreux cycles de déverminage, les lampes sont usées et ne restent plus allumées. L'alimentation pilotée ou ballast est alors constamment en phase d'allumage avec des régimes de surpuissance, qui cumulés à une température élevée entraînent un emballement thermique du convertisseur de tension et donc une destruction de l'interrupteur de puissance qui réalise le découpage de la tension d'alimentation au primaire.

Les phénomènes d'emballement thermique se traduisent ainsi par un appel de courant important et dangereux au primaire du convertisseur de tension, surtout quand il est réalisé sous la forme d'un transformateur magnétique à bobines. Un niveau de courant critique engendre une destruction de l'interrupteur de puissance. Un problème est donc posé de détecter un niveau de courant critique et d'agir rapidement avant la destruction des composants.

Dans le document EP-A2-1.043.919, on décrit un dispositif de protection qui surveille le courant dans l'interrupteur de puissance, particulièrement un transistor, en mesurant la chute de tension à ses bornes, particulièrement la tension entre le drain et la source du transistor, proportionnelle au courant, à l'état passant du transistor. Un comparateur ouvre le transistor lorsque la chute de tension est trop grande.

Un inconvénient d'une telle solution est que la mesure de la tension est dépendante de la résistance dynamique du transistor dont la tolérance est peu précise, et par conséquent la protection est peu fiable.

Un autre inconvénient est que, lorsque la température ambiante est élevée, le convertisseur est plus sensible à l'emballement thermique ce qui entraîne une détérioration du transistor, voire même une destruction du transistor. Or, la solution proposée par le document ne prend pas en compte la température. Le transistor n'est coupé que pour des courants élevés circulant dans la bobine d'induction primaire. La solution de l'état de la technique ne permet pas d'anticiper l'apparition de tels courants.

Un autre inconvénient est que, lorsque le courant est très élevé, des phénomènes de saturation magnétique du transformateur utilisé comme convertisseur de tension apparaissent. La puissance délivrée par le secondaire n'est plus suffisante pour alimenter la charge connectée au secondaire, particulièrement une installation de projecteurs. L'unité de commande de l'installation de projecteurs envoie à une unité de contrôle de l'alimentation à découpage un signal de demande de puissance. Le courant d'induction du convertisseur de tension augmente mais, le transformateur étant toujours saturé, l'alimentation à découpage ne peut toujours pas fournir la puissance nécessaire à l'alimentation de l'installation de projecteurs. Or, la réglementation impose une constance et un niveau de flux optique aux projecteurs. La saturation du transformateur est ainsi un problème important pour l'alimentation des projecteurs. De plus, le maintien d'une demande de puissance élevée par l'unité de commande de l'installation de projecteurs maintient aussi la situation provoquant un appel de courant dangereux, ce qui augmente d'autant le problème de destruction de l'interrupteur.

Afin de remédier à ces inconvénients, l'invention concerne un dispositif de protection pour une alimentation à découpage du type comportant un convertisseur de tension dont le secondaire est connecté à une charge comme une source lumineuse du type lampe xenon, et le primaire est relié à une source d'énergie et est commandé par un interrupteur de puissance éventuellement piloté par une unité de commande, caractérisé en ce qu'il comporte :
- au moins un premier moyen pour produire une image d'un courant circulant dans l'interrupteur de puissance à partir d'un courant circulant dans un condensateur de stockage d'énergie connecté dans le circuit primaire du convertisseur de tension, connecté à
- au moins un second moyen pour détecter sur l'image d'un courant un niveau de courant critique, connecté à
- au moins un troisième moyen de contrôle de l'interrupteur de puissance pour modifier l'état de conduction de l'interrupteur de puissance lors de la détection d'un niveau de courant critique.

Selon un autre aspect de l'invention, les premier, second et troisième moyens sont configurés pour former une première boucle de régulation rapide de l'état de conduction de l'interrupteur de puissance et le dispositif comporte une seconde boucle de régulation lente comportant un contrôleur du fonctionnement global de la charge connectée au secondaire, le second moyen de détection de niveau critique et le troisième moyen de contrôle de l'interrupteur de puissance.

Selon un autre aspect de l'invention, le second moyen pour détecter un niveau de courant critique comporte un moyen de comparaison de caractéristiques d'analyse du courant image en fonction de critères d'analyse comme la comparaison à un seuil critique prédéterminé.

Selon un autre aspect de l'invention, le moyen de comparaison est actif de façon permanente tout en prenant en compte les seuls courants traversant l'interrupteur de puissance.

Selon un autre aspect de l'invention, le second moyen comporte un moyen pour activer le moyen de comparaison du courant image lorsque du courant traverse l'interrupteur de puissance.

Selon un autre aspect de l'invention, le second moyen pour détecter un niveau de courant critique comporte un moyen pour émettre un signal caractéristique d'un niveau de courant critique, connecté à un moyen d'exploitation du signal caractéristique d'un niveau de courant critique appartenant au troisième moyen de contrôle de l'interrupteur de puissance.

Selon un autre aspect de l'invention, le second moyen pour détecter un niveau de courant critique coopère avec un capteur de température pour mesurer une température ambiante.

Selon un autre aspect de l'invention, le second moyen pour détecter un niveau de courant critique comporte un moyen pour adapter les critères d'analyse comme le seuil en fonction de la température mesurée par le capteur de température sur la base d'une fonction prédéfinie telle S=f(T).

Selon un autre aspect de l'invention, l'interrupteur de puissance comprend un transistor de type MOSFET à canal N à enrichissement.

Selon un autre aspect de l'invention, le troisième moyen de contrôle de l'interrupteur de puissance comprend un modulateur de largeur d'impulsion dont la largeur d'impulsion et/ou la forme d'impulsion est déterminée pour contrôler l'état de conduction de l'interrupteur de puissance lors de la détection d'un niveau de courant critique.

Selon un autre aspect de l'invention, le second moyen pour produire une image d'un courant circulant dans l'interrupteur de puissance comporte une association série d'au moins un condensateur et d'au moins une résistance, ladite association étant connectée en parallèle au primaire.

Selon un autre aspect de l'invention, le second moyen pour produire une image d'un courant circulant dans l'interrupteur de puissance comporte un moyen de filtrage et/ou un circuit de protection contre des signaux perturbateurs (surtensions, transitoires, etc.).

Selon un autre aspect de l'invention, le second moyen pour produire une image d'un courant circulant dans l'interrupteur de puissance comporte un moyen de calibration afin de compenser les dispersions des composants du dispositif qui agit sur le moyen de comparaison de caractéristiques d'analyse du courant image en fonction de critères d'analyse comme la comparaison à un seuil critique prédéterminé.

Selon un autre aspect de l'invention, le contrôleur comporte un moyen pour diminuer la puissance demandée au primaire lors de la détection d'un niveau de courant critique, au moins pendant une durée de saturation magnétique du convertisseur de tension.

L'invention concerne aussi un dispositif d'éclairage pour véhicule, du genre comportant une alimentation à découpage et au moins un projecteur avec une lampe à décharge connectée comme chargé électrique à la sortie de l'alimentation à découpage. Le dispositif d'éclairage comporte un dispositif de protection selon l'invention.

Selon un autre aspect de l'invention, l'alimentation à découpage comporte un modulateur de largeur d'impulsion dont la largeur d'impulsion et/ou la forme d'impulsion est déterminée en fonction d'une puissance demandée par l'unité de commande pour contrôler l'état de conduction de l'interrupteur de puissance de l'alimentation à découpage.

Selon un autre aspect de l'invention, l'unité de commande comporte un moyen pour commander une réduction déterminée de puissance demandée lors de la détection d'un niveau de courant critique compatible avec les exigences de la régulation de la charge connectée au secondaire de l'alimentation.

Un avantage de l'invention est que la mesure du courant représentatif du courant circulant dans le primaire du convertisseur n'est pas dépendante de la résistance dynamique du transistor utilisé comme interrupteur de puissance. La mesure d'un tel courant est donc fiable. Elle permet, malgré la dispersion des caractéristiques des transistors utilisés comme interrupteur de puissance, de détecter un niveau de courant critique circulant dans tout genre d'interrupteur de puissance.

Un autre avantage de l'invention est qu'elle prend en compte la température qui, lorsqu'elle est trop élevée, est responsable de l'emballement thermique du convertisseur de tension et par conséquent de la destruction de l'interrupteur de puissance.

Un autre avantage de l'invention est qu'elle permet d'anticiper les phénomènes d'emballement thermique et met en oeuvre la protection avant l'apparition de ces phénomènes.

Un autre avantage de l'invention est qu'elle empêche une saturation prolongée des matériaux magnétiques du convertisseur de tension.

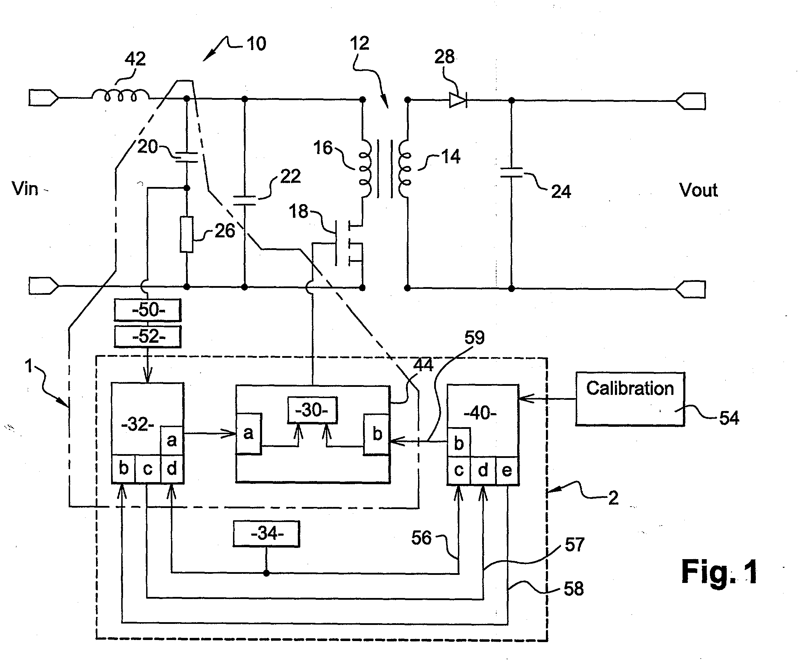

L'invention sera mieux comprise, et d'autres buts, caractéristiques, détails et avantages de celle-ci apparaîtront plus clairement dans la description explicative qui va suivre faite en référence au dessin annexé où la figure 1 représente schématiquement le dispositif de l'invention.

L'alimentation à découpage 10 du type FLYBACK comprend un convertisseur de tension 12, particulièrement un transformateur, dont le secondaire 14 est connecté à une charge (non représentée) à laquelle on applique une tension Vout et dont le primaire 16 est relié à une source d'énergie (non représentée) fournissant une tension d'entrée Vin et est commandé par un interrupteur de puissance 18.

Avantageusement, l'interrupteur de puissance 18 est un transistor de type MOSFET à canal N à enrichissement. Le transistor est commandé de sorte qu'il fonctionne comme un interrupteur de puissance.

Dans un mode de réalisation, la source d'énergie connectée au primaire 16 est une batterie pour véhicule automobile et la charge connectée au secondaire 14 est une installation de projecteurs. L'alimentation à découpage 10 est donc destinée à alimenter l'installation de projecteurs en lui fournissant une tension d'alimentation stable et une puissance suffisante afin que les projecteurs produisent un flux lumineux constant et réglementaire.

Des condensateurs 20 et 22 connectés au primaire 16 fournissent de l'énergie au primaire 16 lorsque l'interrupteur de puissance 18 est fermé. Les condensateurs 20 et 22 stockent de l'énergie lorsque l'interrupteur de puissance 18 est ouvert.

Le condensateur 22 sert également de découplage pour le câblage d'entrée du convertisseur de tension 12.

Un condensateur 24 connecté au secondaire 14 fournit de l'énergie à une charge connectée en sortie du convertisseur de tension 12 lorsque une diode 28 est bloquée, et sert à lisser une tension de sortie Vout du convertisseur de tension 12. Le condensateur 24 stocke de l'énergie lorsque la diode 28 est passante.

Une résistance 26 est connectée au primaire 16 en série avec le condensateur 20.

Une inductance 42 est connectée au primaire 16.

L'alimentation à découpage 10 est connectée à une unité de contrôle 44 pour contrôler et commander l'interrupteur de puissance 18.

L'alimentation à découpage 10 est basée sur le principe du hacheur à stockage inductif et fonctionne selon deux phases (ou modes) distinctes. La première phase correspond à un stockage d'énergie sous forme de champs magnétique dans le transformateur, le secondaire 14 de ce dernier étant ouvert. La seconde phase correspond à une restitution de cette énergie au secondaire 14 du transformateur.

La première phase est une phase de stockage d'énergie. Lorsque l'interrupteur de puissance 18 est fermé, le primaire 16 est alimenté par la source de tension Vin. Particulièrement, les condensateurs 20 et 22 fournissent de l'énergie au primaire 16. La diode 28 placée à la sortie du secondaire 14 est en polarisation inverse et par conséquent aucun courant ne circule dans le bobinage secondaire 14. Le condensateur 24 fournit l'énergie de sortie de l'alimentation à découpage 10. Durant cette phase de stockage, seul le bobinage du primaire 16 est actif et le transformateur 12 peut être traité comme une simple inductance.

La seconde phase est une phase de transfert d'énergie. Lorsque l'interrupteur de puissance 18 est ouvert, le courant dans le bobinage du primaire 16 est nul et les condensateurs 20 et 22 stockent de l'énergie. Le courant induit circule maintenant dans le secondaire 14, la diode 28 placée en sortie étant conductrice et le condensateur 24 stocke de l'énergie. Durant la phase dite FLYBACK, le courant secondaire va décroître jusqu'à ce qu'il atteigne zéro dans le cas d'un transfert complet d'énergie ou jusqu'au moment de la fermeture de l'interrupteur de puissance 18 dans le cas d'un transfert partiel d'énergie, et que le cycle de découpage reprend.

Selon l'invention, l'alimentation à découpage 10 comprend un dispositif de protection contre les courants dangereux circulant dans le primaire 16. La présence de courant dangereux est susceptible d'endommager les composants électroniques, particulièrement l'interrupteur de puissance 18.

Le dispositif de protection comprend ainsi :
- un premier moyen 20, 26 pour produire une image d'un courant circulant dans l'interrupteur de puissance 18 ;
- un second moyen 32 pour détecter un niveau de courant critique ;
- un troisième moyen 30 de contrôle de l'interrupteur de puissance 18.

Le premier moyen 20, 26 pour produire une image d'un courant circulant dans l'interrupteur de puissance 18 comprend, dans un mode de réalisation, une association série d'un condensateur 20 et d'une résistance 26. L'association 20, 26 est connectée en parallèle au primaire 16. On comprend ici un avantage de l'invention de produire l'image du courant circulant dans l'interrupteur de puissance 18. En effet, une mesure du courant circulant dans l'interrupteur de puissance 18 peut être effectuée directement en mesurant la tension aux bornes de l'interrupteur de puissance 18 et en connaissant la résistance dynamique du transistor. Mais, celle-ci se révèle peu fiable car la résistance dynamique entre le drain et la source de l'interrupteur de puissance 18 est une caractéristique soumise à une forte dispersion. Par conséquent, l'intérêt de produire une telle image est que cette dernière n'est pas dépendante d'un paramètre comme la résistance dynamique de l'interrupteur de puissance 18 et la mesure de cette image est donc fiable.

Le second moyen 32 pour détecter un niveau de courant critique comportant une borne d'entrée de l'image du courant issu du moyen de mesure de l'image du courant primaire et une borne de sortie, notamment d'un signal « tout ou rien » qui prend une valeur signalant un niveau de courant critique et une autre valeur signalant que le courant primaire est correct.

Dans un mode de réalisation, le moyen pour détecter un niveau de courant critique comporte un circuit pour analyse la forme d'onde du courant image fourni à l'entrée du moyen 32. En fonction de critères d'analyse de forme d'onde, lesdits critères étant enregistrés dans une mémoire non représentée du moyen 32 sont comparés au résultat d'analyse de la forme d'onde d'entrée, de sorte que, en fonction de critères prédéterminés de comparaison un signal de sortie du moyen 32 soit placé à la valeur de niveau de courant critique ou à la valeur de courant correct.

Dans un autre mode de réalisation, le circuit pour analyser une forme d'onde comporte un comparateur de l'image du courant à un seuil prédéterminé, enregistré dans la mémoire de critères.

Dans un autre mode de réalisation, le comparateur de l'image du courant à un seuil prédéterminé est activé pendant une première partie lors de la montée du courant dans le primaire lors d'une période de découpage. Par exemple, pour un alimentation découpée sur une période de dix microsecondes, la durée de mise en conduction de l'interrupteur de puissance étant de sept microsecondes, cette durée comporte une partie initiale, dite fenêtre d'analyse de la forme d'onde, de cent nanosecondes par exemple, pendant laquelle le signal d'entrée du moyen 32 est comparé au seul préfixé.

On remarque que cette disposition de l'invention permet de mesurer une grandeur directement lié » à la dérivée temporelle du courant primaire (dlₚ/dt)ₒ au démarrage de l'impulsion de commande de mise en conduction de l'interrupteur de puissance. Il en résulte que, dès le début de la montée du courant primaire, le dispositif de protection peut jouer son rôle avant même qu'un courant trop important apparaisse. On comprendra que cette caractéristique de l'invention d'anticiper la situation dangereuse est importante puisque la f.e.m. induite sur le primaire d'inductance Lp est de la forme -L(dlp/dt).

Le troisième moyen 30 de contrôle de l'interrupteur de puissance 18 comporte un modulateur de largeur d'impulsion 30. Le modulateur à largeur d'impulsion 30 a une double fonction et commande l'interrupteur de puissance 18 en produisant un signal, par exemple rectangulaire, périodique de période Tᵣ et de rapport cyclique k. L'interrupteur est donc fermé pendant kTᵣ et ouvert pendant (1-k)Tᵣ au cours de chaque période Tᵣ. Cette récurrence est contrôlée en fonction de la puissance demandée pour déterminer la tension de sortie de l'alimentation à découpage.

Les impulsions du signal rectangulaire sont à amplitude constante et largeur modulable, c'est-à-dire à durée modulable. Les fronts avant des impulsions sont périodiques. Pour déterminer la durée d'impulsion qui de fait détermine la date et la durée de la mise en conduction de l'interrupteur 18, la méthode consiste à comparer un signal en dent de scie avec un signal de référence dont les caractéristiques sont notamment déterminées par la puissance demandée à l'alimentation à découpage. C'est en ce point qu'un calculateur d'éclairage détermine le flux optique du projecteur. La durée d'impulsion cesse lorsque les amplitudes des signaux sont égales.

Le second moyen 32 de détection d'un niveau de courant critique envoie un signal de commande à un moyen pour ouvrir l'interrupteur de puissance dès que la situation d'appel du courant dangereux a été détectée et, ce sans attendre qu'une valeur destructrice du courant dans le primaire soit atteinte. Dans un mode particulier de réalisation, le moyen pour ouvrir l'interrupteur de puissance est intégré au modulateur de largeur d'impulsion pour ouvrir l'interrupteur de puissance 18 lorsque l'image du courant est représentative d'un niveau de courant critique circulant dans l'interrupteur de puissance 18. L'interrupteur de puissance 18 étant ouvert, aucun courant ne circule plus dans l'interrupteur de puissance 18 et ce dernier est ainsi protégé contre le courant dangereux avant que celui-ci n'apparaisse si le seuil déterminant le caractère du niveau critique est réglé suffisamment bas pour éviter cette apparition.

Dans un mode particulier de réalisation, le modulateur de largeur d'impulsion qui sert à contrôler la mise en conduction de l'interrupteur de puissance comporte un générateur commandable de valeur de seuil qui sert de valeur de référence ainsi qu'il a été décrit plus haut pour expliquer le fonctionnement classique du modulateur. La sortie du générateur est connectée à une entrée du comparateur de tension en dent de scie précité, pour assurer que la sortie de comparaison soit mise à la masse pour ouvrir l'interrupteur de puissance 18, un transistor est placé entre la masse et l'entrée de comparaison du comparateur et sa conduction est commandée instantanément par le signal de détection d'un niveau de courant critique. D'autres modes de réalisation sont possibles pour obtenir ce résultat.

En revenant à la constitution du second moyen 32 pour détecter un niveau de courant critique, la présence d'un courant dangereux dans le primaire 16 résulte des phénomènes d'emballement thermique du à des températures élevées. Ainsi, plus la température est élevée, plus le risque d'apparition d'un courant dangereux est élevé. Il convient donc d'anticiper l'apparition d'un tel courant dangereux avant la destruction des composants électroniques, particulièrement de l'interrupteur de puissance 18.

A cette fin, le dispositif de protection comprend :
- un capteur de température 34 pour mesurer la température ambiante T, connecté à un moyen de prise en compte 32d du second moyen 32 de la boucle de régulation rapide 1 et connecté par une liaison 56 à un moyen de prise en compte 40c du contrôleur 40 de la boucle de régulation « lente » 2 ;
- un moyen 36 pour adapter des critères d'analyse de forme d'onde du courant image décrits ci-dessus comme un seuil S en fonction de la température T sur la base d'une fonction f telle que S=f(T).

Le capteur de courant 32 détecte un niveau de courant critique lorsque le courant mesuré devient supérieur au seuil S prédéfini fonction de la température ambiante.

Particulièrement, lorsque la température T augmente, le moyen 36 pour adapter le seuil S diminue le seuil S.

On comprend ici un avantage de l'invention où le dispositif de protection agit sur des courants plus faibles pour des températures élevées afin de protéger les composants électroniques avant l'apparition de courant élevé et dangereux.

Dans des situations de courants élevés, le transformateur magnétique du convertisseur de tension 12 passe à l'état saturé. La puissance fournie par le secondaire 14 n'est plus suffisante pour alimenter correctement l'installation de projecteurs. Il en résulte une baisse du flux lumineux produit par les projecteurs. Une telle situation ne respecte pas les réglementations très strictes imposées vis à vis des flux lumineux des projecteurs.

Pour résoudre ce problème, le dispositif de protection de l'invention comporte aussi un moyen 38 pour commander une réduction déterminée de la puissance demandée au convertisseur de tension 12.

Dans un mode de réalisation avec un modulateur de largeur d'impulsion, le moyen 38 commande une diminution de la durée de mise en conduction de l'interrupteur de puissance au moins lors du régime saturé. Cette diminution va permettre la désaturation des matériaux magnétiques et ainsi permettre au convertisseur de tension 12 de revenir plus rapidement à la puissance requise par l'installation de projecteurs.

La structure de base de l'invention comporte trois moyens :
1. Un premier moyen 20, 26 de mesure d'un courant image du courant traversant l'interrupteur de puissance 18 à protéger ;
2. Un second moyen de détection d'un niveau de courant critique 32 ;
3. Un pilote 44 qui coopère avec un modulateur de genre MLI 30 qui pilote l'électrode de commande de l'interrupteur MOS 18.

La fonction de base de l'invention est d'anticiper l'apparition d'un niveau de courant critique traversant l'interrupteur MOS 18 pour empêcher sa destruction thermique, principalement en empêchant et/ou en réduisant la durée de sa mise en conduction pendant quelques périodes, le temps que la condition provoquant le niveau de courant critique disparaisse. La structure complète du circuit de l'invention comporte :
- une boucle de régulation rapide 1 qui comprend :
   -- le premier moyen de mesure du courant image 20, 26 ;
   -- le filtre 50 ;
   -- le circuit de protection 52 composé de deux diodes (non représentées) en série ;
   -- le second moyen pour détecter un niveau de courant critique 32 ;
   -- le pilote de l'état de conduction de l'interrupteur 18 principalement réalisé par le modulateur MLI 30 ;
   -- l'électrode de commande de l'interrupteur MOS 18 ;
- une boucle de régulation lente 2 qui comprend :
   -- le second moyen pour détecter un niveau de courant critique 32, par une entrée « d » et une entrée « b » et deux sorties « a » et « c » ;
   -- le pilote de l'état de conduction de l'interrupteur 18 par le modulateur MLI 30 et une sortie « d » ;
   -- le contrôleur 40 et ses entrées « a » et « d » et ses sorties « b » et « e ».
   Un circuit de calibration active 54 est ajouté qui configure les programmes du contrôleur 40 lors de sa mise en marche selon des contraintes propres à la régulation « lente ».

On remarque que le capteur de température 34 est connecté aux entrées « d » du second moyen pour détecter un niveau critique 32 et « c » du contrôleur 40.

La régulation « rapide » de la boucle 1, déterminée par les caractéristiques du premier 20 et du second 32 moyens de l'invention, assure la limitation du courant traversant le MOS 18 au niveau de la période du circuit MLI de sorte que l'interrupteur 18 soit protégé des appels de courant dangereux.

La régulation « lente » de la boucle 2 assure la régulation de la limitation possible au niveau de la boucle « lente » en fonction des contraintes de la fonction connectée sur la sortie Vout du secondaire de l'alimentation à découpage 10. L'application typique de l'invention est la fonction d'éclairage sur un projecteur de véhicule.

Selon un aspect de l'invention, le contrôleur 40 est informé par le moyen de détection 32 qu'un niveau critique de courant est atteint. Le programme de régulation qui y est exécuté modifie alors les consignes envoyées au circuit de pilotage 30, 44 de l'électrode de grille de l'interrupteur MOS 18 afin de réduire ou d'interdire l'augmentation de la durée de conduction de l'interrupteur 18 pour sortir du mode de fonctionnement critique.

A la figure 1, la liaison 57 transmet un signal de détection de niveau critique élaboré par le moyen 32c précité du second moyen 32 vers le moyen correspondant 40d du contrôleur 40.

La liaison 58 transmet un signal de détermination de seuil critique de détection sur le second moyen de détection de niveau critique. Ce signal est déterminé par un moyen 40c du contrôleur 40 qui peut être adapté par un moyen de configuration active 54 de sorte qu'il soit adapté à des situations correspondantes à des fonctionnalités de la charge électrique de l'alimentation à découpage. Le moyen correspondant de réception du signal sur la liaison 58 est constitué par un moyen 32b, par exemple constitué par un générateur de tension de seuil dont la sortie est appliquée à une entrée de référence du comparateur de l'image du courant traversant l'interrupteur 18, image produite par le premier moyen 20. La sortie d'un tel comparateur est alors appliquée par la sortie 32a du second moyen 32 à une entrée 30a de modification du régime de fonctionnement « normal » du modulateur MLI du troisième moyen 30.

La liaison 59 transmet un signal de régulation « lente » généré par le contrôleur 40 par un moyen de régulation lente 40b qui est reçu par un moyen 44b du pilote 44 de l'interrupteur électronique 18. Si l'autre moyen 30a ou 44a ne reçoit aucun signal répondant à une situation critique sur le courant traversant l'interrupteur de puissance 18, c'est le moyen 44b qui prend le contrôle du modulateur MLI 30 en déterminant le taux de conduction et le cas échéant la forme d'onde de pilotage de l'état de conduction de l'interrupteur de puissance 18. Le critère de décision n'est pas concerné directement par la présente invention mais par les objectifs de la boucle de régulation « lente » 2 en fonction des fonctionnalités d'une charge comme une lampe d'éclairage halogène d'un projecteur de véhicule.

Par contre, si l'autre moyen 30a ou 44a reçoit un signal répondant à une situation critique sur le courant traversant l'interrupteur de puissance 18, c'est le moyen 30a qui prend le contrôle du modulateur MLI 30 en déterminant le taux de conduction et le cas échéant la forme d'onde de pilotage de l'état de conduction de l'interrupteur de puissance 18. Les objectifs de ce contrôle sont déterminés par la boucle 1 de régulation « rapide » pour protéger l'interrupteur de puissance 18 d'un niveau de courant critique. La détermination appliquée par le moyen 30a peut être une inhibition de toute augmentation du courant traversant, un blocage de l'état de conduction de l'interrupteur de puissance 18 ou un état de faible conduction. Cet état peut être maintenu notamment pendant un nombre prédéterminé de périodes du modulateur MLI, ou tant que le second moyen de détection d'un niveau de courant critique est actif.

## Revendications

1. Dispositif de protection pour une alimentation à découpage (10) du type comportant un convertisseur de tension (12) dont le secondaire (14) est connecté à une charge comme une source lumineuse du type lampe xenon, et le primaire (16) est relié à une source d'énergie et est commandé par un interrupteur de puissance (18) éventuellement piloté par une unité de commande (40), **caractérisé en ce qu'**il comporte :
- au moins un premier moyen (20, 26) pour produire une image d'un courant circulant dans l'interrupteur de puissance (18) à partir d'un courant circulant dans un condensateur de stockage d'énergie (20) connecté dans le circuit primaire (16) du convertisseur de tension (12), connecté à
- au moins un second moyen (32) pour détecter sur l'image d'un courant un niveau de courant critique, connecté à
- au moins un troisième moyen (30) de contrôle de l'interrupteur de puissance (18) pour modifier l'état de conduction de l'interrupteur de puissance lors de la détection d'un niveau de courant critique.

2. Dispositif selon la revendication 1, **caractérisé en ce que** les premier (20), second (32) et troisième (30) moyens sont configurés pour former une première boucle de régulation rapide (1) de l'état de conduction de l'interrupteur de puissance (18) et **en ce que** le dispositif comporte une seconde boucle de régulation lente (2) comportant un contrôleur (40) du fonctionnement global de la charge connectée au secondaire (14), le second moyen (32) de détection de niveau critique et le troisième moyen (30) de contrôle de l'interrupteur de puissance (18).

3. Dispositif selon la revendication 1 ou 2, **caractérisé en ce que** le second moyen (32) pour détecter un niveau de courant critique comporte un moyen de comparaison de caractéristiques d'analyse du courant image en fonction de critères d'analyse comme la comparaison à un seuil critique (S) prédéterminé.

4. Dispositif selon la revendication 3, **caractérisé en ce que** le moyen de comparaison est actif de façon permanente tout en prenant en compte les seuls courants traversant l'interrupteur de puissance.

5. Dispositif selon la revendication 3 ou 4, **caractérisé en ce que** le second moyen (32) comporte un moyen pour activer le moyen de comparaison du courant image lorsque du courant traverse l'interrupteur de puissance (18).

6. Dispositif selon la revendication 5, **caractérisé en ce que** le second moyen (32) pour détecter un niveau de courant critique comporte un moyen (32a) pour émettre un signal caractéristique d'un niveau de courant critique, connecté à un moyen (30a) d'exploitation du signal caractéristique d'un niveau de courant critique appartenant au troisième moyen (30) de contrôle de l'interrupteur de puissance (18).

7. Dispositif selon la revendication 1 ou 2, **caractérisé en ce que** le second moyen (32) pour détecter un niveau de courant critique coopère avec un capteur de température (34) pour mesurer une température (T) ambiante.

8. Dispositif selon la revendication 7, **caractérisé en ce que** le second moyen (32) pour détecter un niveau de courant critique comporte un moyen (36) pour adapter les critères d'analyse comme le seuil (S) en fonction de la température (T) mesurée par le capteur de température (34) sur la base d'une fonction prédéfinie telle S=f(T).

9. Dispositif selon l'une quelconque des revendications précédentes, **caractérisé en ce que** l'interrupteur de puissance (18) comprend un transistor de type MOSFET à canal N à enrichissement.

10. Dispositif selon l'une quelconque des revendications précédentes, **caractérisé en ce que** le troisième moyen (30) de contrôle de l'interrupteur de puissance (18) comprend un modulateur de largeur d'impulsion dont la largeur d'impulsion et/ou la forme d'impulsion est déterminée pour contrôler l'état de conduction de l'interrupteur de puissance lors de la détection d'un niveau de courant critique.

11. Dispositif selon l'une quelconque des revendications précédentes, **caractérisé en ce que** le second moyen (20,26) pour produire une image d'un courant circulant dans l'interrupteur de puissance (18) comporte une association série (20,26) d'au moins un condensateur (20) et d'au moins une résistance (26), ladite association étant connectée en parallèle au primaire (16).

12. Dispositif selon l'une des revendications précédentes, **caractérisé en ce que** le second moyen (20,26) pour produire une image d'un courant circulant dans l'interrupteur de puissance (18) comporte un moyen de filtrage et/ou un circuit de protection contre des signaux perturbateurs (surtensions, transitoires, etc.).

13. Dispositif selon l'une quelconque des revendications 2 à 6 et 11, **caractérisé en ce que** le second moyen (20,26) pour produire une image d'un courant circulant dans l'interrupteur de puissance (18) comporte un moyen de calibration, notamment afin de compenser les dispersions des composants du dispositif qui agit sur le moyen de comparaison de caractéristiques d'analyse du courant image en fonction de critères d'analyse comme la comparaison à un seuil critique (S) prédéterminé.

14. Dispositif selon la revendication 2, **caractérisé en ce que** le contrôleur (40) comporte un moyen (38) pour diminuer la puissance demandée au primaire (16) lors de la détection d'un niveau de courant critique, au moins pendant une durée de saturation magnétique du convertisseur de tension (12).

15. Dispositif d'éclairage pour véhicule, du genre comportant une alimentation à découpage et au moins un projecteur avec une lampe xénon connectée comme charge électrique à la sortie de l'alimentation à découpage, **caractérisé en ce qu'**il comporte un dispositif de protection selon l'une quelconque des revendications précédentes.

16. Dispositif selon la revendication 15, **caractérisé en ce que** l'alimentation à découpage comporte un modulateur de largeur d'impulsion dont la largeur d'impulsion et/ou la forme d'impulsion est déterminée en fonction d'une puissance demandée par l'unité de commande (40) pour contrôler l'état de conduction de l'interrupteur de puissance (18) de l'alimentation à découpage.

17. Dispositif selon la revendication 15, **caractérisé en ce que** l'unité de commande (40) comporte un moyen pour commander une réduction déterminée de puissance demandée lors de la détection d'un niveau de courant critique compatible avec les exigences de la régulation (2) de la charge connectée au secondaire de l'alimentation (10).
